(19) Europäisches Patentamt / European Patent Office / Office européen des brevets

(11) **EP 3 467 490 B1**

(12) **EUROPEAN PATENT SPECIFICATION**

(45) Date of publication and mention of the grant of the patent:
**07.09.2022 Bulletin 2022/36**

(21) Application number: **17195214.6**

(22) Date of filing: **06.10.2017**

(51) International Patent Classification (IPC):
***G01N 29/024*** *(2006.01)* ***G01N 29/032*** *(2006.01)*
***G01N 29/34*** *(2006.01)* ***G01N 29/44*** *(2006.01)*

(52) Cooperative Patent Classification (CPC):
**G01N 29/032; G01N 29/024; G01N 29/343; G01N 29/348; G01N 29/4427;** G01N 2291/011; G01N 2291/015; G01N 2291/0228; G01N 2291/044; G01N 2291/051; G01N 2291/101

(54) **METHOD AND ASSEMBLY FOR DETERMINING THE TYPE OF A FLUID USING ULTRASOUND**

VERFAHREN UND ANORDNUNG ZUR BESTIMMUNG DES TYPS VON FLUID MITTELS ULTRASCHALL

PROCÉDÉ ET ENSEMBLE PERMETTANT DE DÉTERMINER LE TYPE D'UN FLUIDE AU MOYEN D'ULTRASONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2019 Bulletin 2019/15**

(73) Proprietor: **TE Connectivity Norge AS**
**5258 Blomsterdalen (NO)**

(72) Inventors:
- **Kolesnikov, Viktor**
  **5254 Bergen (NO)**
- **Bøe, Håkon**
  **5081 Bergen (NO)**

(74) Representative: **Grünecker Patent- und Rechtsanwälte PartG mbB**
**Leopoldstraße 4**
**80802 München (DE)**

(56) References cited:

| | |
|---|---|
| **GB-A- 1 583 746** | **US-A- 5 076 094** |
| **US-A- 5 473 934** | **US-A- 5 767 407** |
| **US-B1- 7 246 522** | **US-B2- 8 820 147** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The invention relates to a method and assembly for determining the type of a fluid using ultrasound.

The method and assembly according to the invention are particularly suited for application in the automobile sector, e.g. to determine the type of fluid used to reduce or eliminate pollutants in exhaust gases from combustion engines, such as urea or a water-based urea solution or a similar reagent fluid. The method and assembly may be used to ensure that the type of fluid that is contained in a tank conforms to environmental protection regulations.

Methods and an apparatus for multiparameter acoustic signature inspection are known from US 7 246 522 B1 which relates to the determination of liquids in containers. The attenuation of ultrasonic waves is used to distinguish between substances which have the same speed of sound. From US 5 767 407 A, an identification system for fluids which uses ultrasonic waves is known. A standing wave pattern is formed in the fluid, whereby the frequency is swept until a standing wave pattern forms. Said pattern is then analyzed, whereby the speed of sound and the attenuation are derived. A multiphase fluid characterization system is known from US 8 820 147 B2. The system is provided with a plurality of transducers. Different pairs of transducers are used for deriving the components of the fluid, the flow rate and the volume of gas bubbles. The composition of the fluid is derived from analyzing the speed of sound and the attenuation in the fluid.

An unambiguous determination of the type of fluid in such a tank is, however, not always easy as, at least at some temperatures, more than one type of fluid may exhibit the same or very similar characteristics. If this is the case, these types of fluids cannot be discerned from one another.

It is therefore the object of the invention to provide a method and assembly which allow an unambiguous identification of the type of fluid.

According to the invention, this object is achieved by a method according to claim 1.

The object is also solved by an assembly according to claim 7.

The method and assembly according to the invention allow to unambiguously define the type of fluid, through which the ultrasound signal propagates. Any ambiguity in defining the type fluid as present in the known technique of measuring the speed of sound is avoided. As the attenuation at a certain frequency depends on a different principle than the speed of sound, the type of fluids that have the same or similar speed of sound will have a different attenuation at the at least one frequency. Thus, the ambiguity can be resolved by using the attenuation at at least two different ultrasound frequencies for determining the type of fluid.

According to the invention, a first ultrasound signal is sent into the fluid before the, in this case second, ultrasound signal. From the first ultrasound signal, the speed of sound is determined automatically. A candidate set of fluid types is automatically determined from the speed of sound of the first ultrasound signal.

The candidate set is a data set which contains the representation of at least one fluid type of which a stored speed of sound differs from the measured speed of sound by less than a predetermined amount. The attenuation as determined from the second ultrasound signal is automatically compared to a stored attenuation value of the at least one type of fluid in the candidate set.

A first selection of the fluid type may be automatically performed depending on the measured speed of sound. For example, stored or fit data may be used to automatically find a fluid which exhibits the measured speed of sound.

The second ultrasound signal may comprise more than two different frequencies, in particular ultrasound frequencies, and the attenuation is determined in these at least two frequencies. Using more than one frequency for measuring the attenuation of ultrasound waves in the fluid generates more reliable results in identifying the type of fluid.

The assembly may comprise a temperature sensor for measuring the temperature of the fluid. The amplitude and/or frequency content of the first and/or second signal may be generated depending on the fluid temperature as measured by the temperature sensor.

If the temperature of the fluid is measured, the type of fluid may be determined using the temperature-dependent speed of sound. For each of a plurality of fluids, pairs of temperature data and the speed of sound data at that temperature may be stored for reading and/or fitting. Using the measured temperature and the measured speed of sound, the fluid may be determined from looking up these data. This allows a more accurate determination of the type of fluid, as the speed of sound may vary over temperature. Stored data may be used, in which the speed of sound and the fluid temperature are assigned to a particular type of fluid.

According to the invention, the speed of sound, in particular at different temperatures, for a plurality of types of fluids is stored in a memory. The memory is part of the assembly. The speed of sound of the several types of fluids, potentially including the temperature-dependency, may be stored in the form of a look-up table, as discreet values for inter- and/or extrapolation, and/or as an analytical equation. The speed-of-sound data may have been generated by experiments and been programmed into the assembly.

According to another embodiment, a representation of the diameter of the tank opposite the ultrasound sending/receiving subassembly is stored in memory. This representation is used to compute the attenuation of the first, second, third and any further reflection of the first and/or second ultrasound signal of the opposite walls of the tank.

According to the invention, a candidate set of fluid types is automatically determined from the speed of sound of the first signal, the candidate set containing at least one fluid type, of which the speed of sound differs from the determined speed of sound by a predetermined amount. The attenuation determined from the second signal is automatically compared to a stored attenuation value of the at least one type of fluid in the candidate set. Thus, the memory also comprises stored values of attenuation at a plurality of frequencies to allow such a comparison. By limiting the comparison to only the fluid types that are contained in the candidate set, the identification process can be sped up and carried out with only a small computational effort. Especially the latter allows using simpler electronic components.

If there is only one type of fluid in the candidate set, it may be not necessary to generate the second ultrasound signal, as there is no unambiguity. Thus, the second ultrasound signal may only be generated if there are more than two different types of fluids in the candidate set. However, generating the second ultrasound signal only if there are more than two different types of fluids in the candidate set, is not part of the invention.

It should be noted that a type of fluid in the candidate set or in general in the assembly may be represented by data, such as a certain numerical value in any given number format, such as binary, decimal, ascii, or hexadecimal.

The second ultrasound signal comprises more than one ultrasound frequency. This may be achieved by varying the frequency of the second ultrasound signal over time or by overlapping two or more frequencies at a given time, e.g. by a superposition of waves. The number of frequencies contained in the second ultrasound signal, and in particular the number of frequencies which are used to determine the attenuation, may depend on the number of fluid types in the candidate set. For example, the number of different frequencies contained in the second ultrasound signal may be at least the number of fluid types in the candidate set.

The second ultrasound signal may contain or consist of a chirp signal, a superposition of single-frequency waves or chirp signals, and/or a series of pulses of constant and/or varying duration, frequency, amplitude and/or duty cycle. Each pulse may contain or consist of more than one ultrasound frequency.

It is generally preferred that the second ultrasound signal depends on the type of fluids in the candidate set. For example, for each type of fluid, one or more frequencies may be stored, preferably for a given temperature, in which the attenuation or, equivalently, absorption exhibits a unique characteristic, such as being either non-existent or maximum. These fluid-type dependent frequencies may be automatically looked up in the stored data and the resulting frequency may be used for each fluid type in the candidate set for generating the second signal.

The first and second ultrasound signals may be identical. To allow an accurate identification of the type of fluid in ambiguous cases, it is preferred, however, that the first and second signals differ.

In the following, the invention is described exemplarily by means of an embodiment which is shown in the accompanying drawings. In the drawings, the same reference numeral is used for elements that correspond to each other with respect to function and/or design.

The combination of features in the described embodiment is only an example. According to the above general description, any feature, of which the technical effect is not needed for a particular application, may be omitted. Similarly, a feature, of which the technical effect is needed for a particular application, may be added to the described embodiment.

In the figures,

Fig. 1 shows a schematic representation of an assembly for detecting the type of fluid using ultrasound according to the invention;

Fig. 2A-E show schematic samples of second ultrasound signals;

Fig. 3 shows a schematic graphic representation of data for determining frequencies in the second ultrasound signal;

Fig. 4 shows a schematic graphic representation of the speed of sound in different types of fluids over temperature;

Fig. 5 shows a schematic graphic representation of an alternative value at a certain frequency for different fluid types.

First, the design of an assembly 1 for determining the type of a fluid 2 in a tank 4 is described with reference to Fig. 1. The tank 4 does not necessarily form part of the assembly 1. It may, however, be such a part.

The fluid 2 is preferably a reagent fluid which is used in the automobile sector. In particular, the tank 4 may be a tank for a water-based urea solution or another fluid 2 for cleaning exhaust gases of an combustion engine.

The assembly 1 comprises an ultrasound sending/receiving subassembly 6. The subassembly 6 may comprise a separate ultrasound emitter (not shown) and a separate ultrasound microphone (not shown), or both the sending and receiving function may be unitarily combined in a single ultrasound transducer head as shown.

The assembly 1 further comprises a controller 8, which may be a program run in a general-purpose computer or may comprise an electronic component as shown, on which the various functions may be hardwired and/or programmed. For example, the controller 8 may be an ASIC. The assembly 1 may further comprise a temperature sensor 10 for measuring a temperature of the fluid 2 and sending a temperature signal 12, which is representative of the temperature of the fluid 2, to the controller 8 via a wired, wireless or virtual temperature data line 14.

The ultrasound sending/receiving subassembly 6 is connected via a wired, wireless or virtual output line to a function generator module 18 for generating output signals 20. A virtual line may e.g. be generated using data in a stream, which data are addressed uniquely to a device. The output signals 20 are sent via the output line 16 to the ultrasound sending/receiving subassembly 6, where they are converted into ultrasound signals 22 that are directed into the fluid as indicated by arrow 24, which indicates a propagation direction. The ultrasound signals 22 are reflected e.g. by a surface 26 of the tank 4, which surface 26 may be located opposite the ultrasound sending/receiving subassembly 6 in the propagation direction 24 of the ultrasound signals 22.

The ultrasound sending/receiving subassembly 6 records the incoming reflected ultrasound signal 28 resulting from the sent ultrasound signal 22, as indicated by arrow 30. Not only the first reflection off the surface 26 may be recorded but any number of subsequent reflections. The incoming reflected ultrasound signals 28 are converted into input signals 32 by the ultrasound sending/receiving subassembly 6. The input signals 32 are transmitted by a wired, wireless and/or virtual input line 34 to a processor module 36. The processor module 36 is configured to compute a speed of sound from the ultrasound signals 22, 28, e.g. by a simple runtime analysis. The processor module 36 is further configured to compute an attenuation of the ultrasound signals 22, 28 at at least two frequencies of the ultrasound signals 22. Both the speed of sound computed by the processor module 36 and the frequency-dependent attenuation of the second ultrasound signal as it propagates through the fluid also computed by the processor module 36 allow identifying the type of fluid 2 unambiguously.

To help with the identification, the controller 8 comprises a memory 38, in which various data are stored.

For example, a continuous or scattered first section 40 of the memory 38 may contain data which are representative of the speed of sound v at various temperatures T for different fluid types 2. An example of such data is shown in Fig. 4, where the speed of sound over temperature is shown for different water-based AdBlue fluids, diesel, tap water, salt water, various concentrations of glycol in water and various concentrations of window washing fluid (WWF). The data may be stored as at least one of discrete data points which may be used for inter- or extrapolation, as a look-up table, and as an analytical, e.g. approximative, function. The data may be based on experiments.

In Fig. 4, dashed and numerated boxes are shown, where the speed of sound of different types of fluids 2 differs only slightly at a given temperature. Thus, a speed of sound v as measured by the ultrasound sending/receiving subassembly 6 and/or the determination algorithm carried out by the processor module 36 may not be accurate enough to unambiguously define which type of fluid 2 is in the tank 4 (Fig. 1) by using the measured speed of sound.

In the following, it is explained how to resolve this ambiguity with the assembly 1 and the method according to the invention. By way of example only, this is explained with reference to the dashed box containing the numeral 5 in Fig. 4. In box 5, a speed of sound $v_1$ has been measured by the assembly 1. To compensate for measurement errors, a predetermined amount of variation $\Delta v$ is defined in the assembly 1, in particular the processing module 36. The variation may be defined by a user or automatically. Thus, all fluids 2 which have a stored speed of sound of $v_1 - \Delta v$ and $v_1 + \Delta v$ are considered. The representation of these fluids 2 in the memory section 40 constitutes a candidate set 42 of types of fluids 2. To also account for errors and inaccuracies when measuring the temperature of the fluid 2 using the temperature sensor 10 (Fig. 1), a similar interval $\Delta T$ may be used around the measured temperature $T_1$.

In such an instance, the candidate set 42 contains all those fluids 2 which at a temperature of between $T_1$-$\Delta T_2$ and $T_1$+$\Delta T_2$ have a speed of sound of between $v_1$-$\Delta v$ and $v_1$+$\Delta v$. In the example, the fluids 2 within the candidate set 42 are symbolically represented as [1], [2], [3], [4] and may represent, for example, a 50% solution of window washing fluid with a minimum application temperature of -16 °C, a 25.1% water-based solution of AdBlue, a 32.5% water-based solution of AdBlue and salt water of a density of 125 g/l. The type of fluid 2 may be represented within the assembly 1 as a numerical value.

In order to resolve this ambiguity, the assembly 1 is switched from a first operational mode, in which the speed of sound v is determined using a first ultrasound signal to a second operational mode, in which a second ultrasound signal is generated by the function generator module 18 and the ultrasound sending/receiving subassembly 6. To perform this switch, a switching module 37 may be provided in the assembly 1, in particular the controller 8. The second ultrasound signal 48 preferably differs from the first ultrasound signal 44 and contains more than one frequency. Whereas the first ultrasound signal is used to determine the speed of sound and thus to determine the candidate set 42 of fluid types 2, the second ultrasound signal 48 is used to determine the attenuation or, equivalently, the absorption or attenuation of ultrasound at at least two different frequencies of the second ultrasound signal 48. This second measurement is then used to unambiguously define a single type of fluid 2 within the candidate set 42.

The identification of the fluid by the attenuation at at least two different frequencies is based on the following equation:

$$X = \alpha \times l \times f,$$

where X is the attenuation, l is the length of the path the ultrasound travels through the fluid from the sender to the receiver within the ultrasound sending/receiving subassembly, f is the frequency of the ultrasound signal and $\alpha$ is the fluid-dependent attenuation per unit length and frequency, e.g. in [dB $MHz^{-1}$ $cm^{-1}$], i.e. a material-dependent quantity. As the dimensions of the tank are known, l is known for the first and any further reflection of the ultrasound signal. The frequency f is also known and the attenuation X is measured. This allows to identify $\alpha$, and by mapping a and f and comparing it to fit or stored data, the fluid can be identified. This is explained below in more detail.

Of course additional parameters can also be measured which can be used to identify the fluid, such as dispersion and/or speed of sound at different ultrasound frequencies.

An example of a first ultrasound signal 44 is shown in Fig. 2A, in which the amplitude A of the ultrasound signal 22 over time t is depicted. As can be seen, the first ultrasound signal 44 may comprise at least one pulse 46 containing an ultrasound wave of a single frequency.

Examples of a second ultrasound signal 48 are shown in Figs. 2B-D.

The second signal contains more than one frequency. The different frequencies may result from a variation of the frequency of the ultrasound signal 22 itself or by modifying the amplitude of the second ultrasound signal 48 over time, so that an envelope 50 (Fig. 2B) represents a different frequency. Of course, the frequencies contained in the second ultrasound signal 48 should be within the frequency range that can be detected by the ultrasound sending/receiving subassembly 6.

The second ultrasound signal 48 may be a continuous signal or a discontinuous signal comprising several pulses. An example of a continuous signal is a continuous ultrasound wave of which the frequency may change discontinuously or continuously, e.g. a chirp signal. Of course, the pulses themselves may also be chirp signals. Fig. 2C shows an example of a chirp signal with increasing frequency. The frequency may also decrease over time. The second ultrasound signal 48 may also comprise pulses which have different frequency as shown in Fig. 2D and/or amplitudes and/or duty cycles as shown in Fig 2E. Any combination of the above described second ultrasound signals may be used.

The second ultrasound signal 48 may be formed depending on the candidate set 42. For example, the frequency, amplitude, the duration of one or more pulses, the duty cycle of one and more pulses, and/or the frequency contained in each of the pulses may be determined depending on the number and/or type of fluids 2 in the candidate set 42. For this, the assembly 1, in particular the controller 8 may comprise a memory section 52 (Fig. 1). The memory section 52 contains for each type of fluid 2, which is preferably also contained in the memory section 40, data which are representative for frequencies f, at which ultrasound absorption or attenuation may reach a maximum. An example of such data is shown in Fig. 3 for the fluids [1] to [4] of the candidate set 42. Only those frequencies of the data stored in memory section 52 are used for generating the second ultrasound signal 48 that do not overlap. For example, frequency $f_1$ will not be used, as this frequency will not allow distinguishing between fluids [1] and [2]. The remaining frequencies will then be used to compose the second ultrasound signal 48. Of course, instead of just defining the frequency, memory section 52 may also store other parameters, such as the complete signal shape or analytical function signal for each fluid 2 which have been shown to most clearly identify a given type of fluid. In such a case, the second ultrasound signal 48 is composed by simply reading the signal data from memory section 52. For finally determining the type of fluid 2 in the tank 4, the attenuation X at the frequencies $f_2$ to $f_n$ contained within the second ultrasound signal is measured and compared with data stored in another memory section 54. In these data, the attenuation X at different frequencies is stored. If, for example, an attenuation $X_{[4]}$ is measured at a frequency $f_2$, the fluid types [1], [2] and [3] from candidate set 42 are discarded. The result output 56 of controller 8 contains result data that are representative of the fluid type [4]. This means that the method and assembly have identified the fluid 2 in the tank 4 to correspond to fluid [4] of the candidate set.

As can be seen from Fig.4, the absorption or attenuation X at frequency $f_2$ of the other fluids in the candidate set 42 is sufficiently different from the fluid type [4] to avoid an erroneous identification of a fluid 2 due to measurement errors. This is because the frequencies in the second ultrasound signal 48 have been determined using the data in memory section 52 to result in unambiguous measurement.

### Reference Numerals

| | |
|---|---|
| 1 | assembly |
| 2 | fluid |
| 4 | tank |
| 6 | ultrasound sending/receiving subassembly |
| 8 | controller |
| 10 | temperature sensor |
| 12 | temperature signal |
| 14 | temperature data line |
| 16 | output line |
| 18 | function generator module |
| 20 | output signal |
| 22 | ultrasound signal |
| 24 | arrow/propagation direction |
| 26 | surface of tank |
| 28 | incoming reflected ultra sound signal |
| 30 | arrow |
| 32 | input signal |
| 34 | input line |

36 processor module
37 switching module
38 memory
40 first section of memory
42 candidate set
44 first ultrasound signal
46 pulse
48 second ultrasound signal
50 envelope
52 memory section
54 memory section
56 result output of controller
58 result data
A amplitude
$\alpha$ attenuation coefficient
f frequency
l length
T temperature
t time
v speed of sound
X attenuation or absorption

**Claims**

1. Method for determining the type of a fluid (2), in particular a reagent fluid as used in the automobile sector, such as a water-based solution of urea, the method comprising the steps of sending a second ultrasound signal (48) into the fluid (2), the second ultrasound signal (48)

   comprising at least a first frequency (f) and a second frequency (f) different from the first frequency (f), and automatically determining the attenuation (X) of the second ultrasound signal (48) at least at the first and second frequency (f), and determining the type of fluid from the attenuation at the first and second frequency (f), wherein a first ultrasound signal (44) is sent into the fluid (2) before the second ultrasound signal (48) and the speed of sound (v) of the fluid (2) is determined automatically from the first ultrasound signal (44),
   **characterized in that** a candidate set (42) of fluid types (2) is automatically determined from the speed of sound (v) of the first ultrasound signal (44), the candidate set (42) containing at least one fluid type (2), wherein the stored speed of sound (v) of the at least one fluid type contained in the candidate set (42) differs from the speed of sound (v) determined from the first ultrasound signal (44) by less than a predetermined amount ($\Delta v$), and wherein the attenuation (X) at the at least two different frequencies determined from the second ultrasound signal (48) is automatically compared to stored attenuation values (X) at at least two different frequencies of the at least one type of fluid (2) in the candidate set (42).

2. Method according to claim 1, wherein the frequency (f) of the second ultrasound signal (48) varies over time.

3. Method according to any one of claims 1 or2, wherein the second ultrasound signal (48) contains a series of pulses (46).

4. Method according to any one of claims 1 to 3, wherein the second ultrasound signal (48) is formed depending on the at least one type of fluid (2) in the candidate set (42).

5. Method according to claim 4, wherein at least one of the frequency (f), the amplitude (A), a number of pulses (46), a duration of at least one pulse (46) and a duty cycle of pulses (46) of the second ultrasound signal (48) is formed depending on the at least one type of fluid (2) in the candidate set (42).

6. Method according to any one of claims 1 to 5, wherein the first ultrasound signal (44) differs from the second ultrasound signal (48).

7. Assembly (1) for determining the type of a fluid (2), in particular a reagent fluid used in the automotive sector, the assembly (1) being configured to be mounted to a tank (4) containing the fluid (2), the assembly (1) comprising an ultrasound sending/receiving subassembly (6) for sending ultrasound signals (22, 44, 48) into the fluid (2) and receiving the reflected ultrasound signals (48) from the fluid (2), the assembly (1) being configured to be switched to a second mode of operation wherein the assembly (1) is configured to send and receive a second ultrasound signal (48) containing at least two different frequencies (f) respectively from and by the ultrasound sending/receiving subassembly (6), the assembly (1) further comprising a processor module (36) for determining the attenuation (X) at the at least two different frequencies of the second ultrasound signal (48), the assembly (1) being further configured to be switched to a first mode of operation wherein the assembly (1) is configured to send and receive a first ultrasound signal (44) respectively from and by the ultrasound sending/receiving subassembly (6), the processor module (36) being configured to determine the speed of sound (v) from the first ultrasound signal (44),
**characterized in that** the assembly (1) comprises a memory section (38, 54), the memory section (38, 54) being configured to store the attenuation (X) at at least two different frequencies (f) and the speed of sound (v) for different types of fluids (2), and **in that** the processor module (36) is configured to automatically determine a candidate set (42) of fluid types (2) from the speed of sound (v) of the first ultrasound signal (44), the candidate set (42) containing at least one fluid type (2), wherein the stored speed of sound (v) of the at least one fluid type contained in the candidate set (42) differs from the speed of sound (v) determined from the first ultrasound signal (44) by less than a predetermined amount ($\Delta$v), and **in that** the processor module (36) is configured to automatically compare the attenuation (X) at the at least two different frequencies determined from the second ultrasound signal (48) to the stored attenuation values at at least two different frequencies (X) of the at least one type of fluid (2) in the candidate set (42), and wherein the assembly (1) further comprises a switching module (37) for switching the assembly (1) from the first into the second mode depending on the speed of sound (v) determined by the processor module (36).

**8.** Assembly (1) according to claim 7, wherein the assembly further includes a temperature sensor (10) for determining the temperature (T) of the fluid (2), and wherein the assembly is configured to be switched from the first into the second mode of operation depending on the temperature (T) of the fluid (2).

**9.** Assembly (1) according to claim 8, wherein the assembly is configured to form the second ultrasound signal (48) depending on at least one of the speed of sound (v) and the temperature (T) of the fluid (2) determined from the first ultrasound signal (44).

**10.** Assembly (1) according to any one of claims 7 to 9, wherein the assembly (1) further comprises a second memory section (52), the memory section (52) being configured to store at least one of the frequency, a shape, a pulse duration, a pulse duty cycle and a pulse frequency for different types of fluids (2).

**Patentansprüche**

**1.** Verfahren zum Bestimmen der Art einer Flüssigkeit (2), insbesondere einer Reagenzflüssigkeit, wie sie im Automobilsektor eingesetzt wird, beispielsweise einer wasserbasierten Lösung von Harnstoff, wobei das Verfahren die folgenden Schritte umfasst:

Senden eines zweiten Ultraschallsignals (48) in die Flüssigkeit (2), wobei das zweite Ultraschallsignal (48) wenigstens eine erste Frequenz (f) und eine zweite Frequenz (f) umfasst, die sich von der ersten Frequenz (f) unterscheidet, sowie

automatisches Bestimmen der Dämpfung (X) des zweiten Ultraschallsignals (48) wenigstens bei der ersten und der zweiten Frequenz (f), sowie

Bestimmen der Art des Fluids anhand der Dämpfung bei der ersten und der zweiten Frequenz (f), wobei ein erstes Ultraschallsignal (44) vor dem zweiten Ultraschallsignal (48) in die Flüssigkeit (2) gesendet wird und die Schallgeschwindigkeit (v) der Flüssigkeit (2) automatisch anhand des ersten Ultraschallsignals (44) bestimmt wird,

**dadurch gekennzeichnet, dass**

ein Kandidaten-Satz (42) von Arten von Flüssigkeiten (2) automatisch anhand der Schallgeschwindigkeit (v) des ersten Ultraschallsignals (44) bestimmt wird, wobei der Kandidaten-Satz (42) wenigstens eine Art von Flüssigkeit (2) einschließt, die gespeicherte Schallgeschwindigkeit (v) der wenigstens einen in dem Kandidaten-Satz (42) eingeschlossenen Art von Flüssigkeit sich von der anhand des ersten Ultraschallsignals (44) bestimmten Schallgeschwindigkeit (v) um weniger als einen vorgegebenen Betrag ($\Delta$v) unterscheidet, und die anhand des zweiten Ultraschallsignals (48) bestimmte Dämpfung (X) bei den wenigstens zwei verschiedenen Frequenzen automatisch mit gespeicherten Dämpfungswerten (X) bei wenigstens zwei verschiedenen Frequenzen der wenigstens einen Art von Flüssigkeit (2) in dem Kandidaten-Satz (42) verglichen wird.

**2.** Verfahren nach Anspruch 1, wobei die Frequenz (f) des zweiten Ultraschallsignals (48) im Laufe der Zeit variiert.

**3.** Verfahren nach einem der Ansprüche 1 oder 2, wobei das zweite Ultraschallsignal (48) eine Reihe von Impulsen (46) einschließt.

**4.** Verfahren nach einem der Ansprüche 1 bis 3, wobei das zweite Ultraschallsignal (48) in Abhängigkeit von der wenigstens einen Art von Flüssigkeit (2) in dem Kandidaten-Satz (42) ausgebildet wird.

**5.** Verfahren nach Anspruch 4, wobei die Frequenz (f), die Amplitude (A), eine Anzahl von Impulsen (46), eine Dauer wenigstens eines Impulses (46) oder/und ein Tastverhältnis von Impulsen (46) des zweiten Ultraschallsignals (48) in Abhängigkeit von der wenigstens einen Art von Flüssigkeit (2) in dem Kandidaten-Satz (42) ausgebildet wird.

**6.** Verfahren nach einem der Ansprüche 1 bis 5, wobei sich das erste Ultraschallsignal (44) von dem zweiten Ultraschallsignal (48) unterscheidet.

**7.** Anordnung zum Bestimmen der Art einer Flüssigkeit (2), insbesondere einer Reagenzflüssigkeit, wie sie im Automobilsektor eingesetzt wird, wobei die Anordnung (1) zum Montieren an einem Tank (4) ausgeführt ist, der die Flüssigkeit (2) enthält, die Anordnung (1) eine Teilanordnung (6) zum Senden/Empfangen von Ultraschallsignalen umfasst, mit der Ultraschallsignale (22, 44, 48) in die Flüssigkeit (2) hinein gesendet und die reflektierten Ultraschallsignale (48) aus der Flüssigkeit (2) empfangen werden, die Anordnung (1) zum Umschalten auf einen zweiten Betriebsmodus ausgeführt ist, in dem die Anordnung (1) so ausgeführt ist, dass sie ein zweites Ultraschallsignal (48), das wenigstens zwei unterschiedliche Frequenzen (f) enthält, jeweils von und durch die Teilanordnung zum Senden/Empfangen von Ultraschall sendet und empfängt, die Anordnung (1) des Weiteren ein Prozessor-Modul (36) zum Bestimmen der Dämpfung (X) bei den wenigstens zwei unterschiedlichen Frequenzen des zweiten Ultraschallsignals (48) umfasst, die Anordnung (1) des Weiteren zum Umschalten auf einen ersten Betriebsmodus ausgeführt ist, in dem die Anordnung (1) so ausgeführt ist, dass sie ein erstes Ultraschallsignal (44), jeweils von und durch die Teilanordnung (6) zum Senden und Empfangen von Ultraschall sendet und empfängt, das Prozessor-Modul (36) so ausgeführt ist, dass es die Schallgeschwindigkeit (v) anhand des ersten Ultraschallsignals (44) bestimmt,
**dadurch gekennzeichnet, dass** die Anordnung (1) einen Speicherabschnitt (38, 54) umfasst, wobei der Speicherabschnitt (38, 54) so ausgeführt ist, dass er die Dämpfung (X) bei wenigstens zwei unterschiedlichen Frequenzen (f) und die Schallgeschwindigkeit (v) für unterschiedliche Arten von Flüssigkeiten (2) speichert, und dadurch, dass das Prozessor-Modul (36) so ausgeführt ist, dass es automatisch einen Kandidaten-Satz (42) von Arten von Flüssigkeiten (2) anhand der Schallgeschwindigkeit (v) des ersten Ultraschallsignals (44) bestimmt, wobei der Kandidaten-Satz (42) wenigstens eine Art von Flüssigkeit (2) einschließt, wobei sich die gespeicherte Schallgeschwindigkeit (v) der wenigstens einen in dem Kandidaten-Satz (42) eingeschlossenen Art von Flüssigkeit von der anhand des ersten Ultraschallsignals (44) bestimmten Schallgeschwindigkeit (v) um weniger als einen vorgegebenen Betrag ($\Delta v$) unterscheidet, und dadurch, dass das Prozessor-Modul (36) so ausgeführt ist, dass es automatisch die anhand des zweiten Ultraschallsignals (48) bestimmte Dämpfung (X) bei den wenigstens zwei unterschiedlichen Frequenzen mit den gespeicherten Dämpfungs-Werten bei wenigstens zwei unterschiedlichen Frequenzen (X) der wenigstens einen Art von Flüssigkeit (2) in dem Kandidaten-Satz (42) vergleicht, und die Anordnung (1) des Weiteren ein Umschalt-Modul (37) umfasst, mit dem die Anordnung (1) in Abhängigkeit von der durch das Prozessor-Modul (36) bestimmten Schallgeschwindigkeit (v) von dem ersten in den zweiten Modus umgeschaltet wird.

**8.** Anordnung (1) nach Anspruch 7, wobei die Anordnung des Weiteren einen Temperatursensor (10) zum Bestimmen der Temperatur (T) der Flüssigkeit (2) enthält, und die Anordnung so ausgeführt ist, dass sie in Abhängigkeit von der Temperatur (T) der Flüssigkeit (2) von dem ersten in den zweiten Betriebsmodus umschaltet.

**9.** Anordnung (1) nach Anspruch 8, wobei die Anordnung so ausgeführt ist, dass sie das zweite Ultraschallsignal (48) in Abhängigkeit von der Schallgeschwindigkeit (v) oder/und der Temperatur (T) der Flüssigkeit (2) ausbildet, die anhand des ersten Ultraschallsignals (44) bestimmt wird/werden.

**10.** Anordnung (1) nach einem der Ansprüche 7 bis 9, wobei die Anordnung (1) des Weiteren einen zweiten Speicherabschnitt (52) umfasst, wobei der Speicherabschnitt (52) so ausgeführt ist, dass er die Frequenz, eine Form, eine Impuls-Dauer, ein Impuls-Tastverhältnis oder/und eine Impuls-Frequenz für verschiedene Arten von Flüssigkeiten (2) speichert.

## Revendications

**1.** Procédé de détermination du type de fluide (2), en particulier d'un fluide réactif tel qu'utilisé dans le secteur automobile, tel qu'une solution aqueuse d'urée, le procédé comprenant les étapes d'envoi d'un deuxième signal ultrasonore (48) dans le fluide (2), le deuxième signal ultrasonore (48) comprenant au moins une première fréquence (f) et une deuxième fréquence (f) différente de la première fréquence (f), et de détermination automatique de l'atténuation (X) du deuxième signal ultrasonore (48) au moins auxdites première et deuxième fréquences (f), et de détermination du type de fluide à partir de l'atténuation des première et deuxième fréquences (f), dans lequel un premier signal ultrasonore (44) est envoyé dans le fluide (2) avant le deuxième signal ultrasonore (48), et la vitesse du son (v) du fluide (2) est déterminée automatiquement par le premier signal ultrasonore (44),
**caractérisé en ce qu'**un ensemble de candidats (42) de types de fluide (2) est déterminé automatiquement à partir de la vitesse du son (v) du premier signal ultrasonore (44), l'ensemble de candidats (42) contenant au moins un type de fluide (2), dans lequel la vitesse du son stockée (v) dudit au moins un type de fluide contenu dans l'ensemble de candidats (42) diffère de la vitesse du son (v) déterminée à partir du premier signal ultrasonore (44) d'au moins une quantité prédéterminée ($\Delta v$), et dans lequel l'atténuation (X) auxdites au moins deux fréquences différentes déterminées à partir du deuxième signal ultrasonore (48) est comparée automatiquement aux valeurs d'atténuation stockées (X) à au moins deux fréquences différentes dudit au moins un type de fluide (2) dans l'ensemble de candidats (42).

**2.** Procédé selon la revendication 1, dans lequel la fréquence (f) du deuxième signal ultrasonore (48) varie au cours du temps.

**3.** Procédé selon l'une quelconque des revendications 1 et 2, dans lequel le deuxième signal ultrasonore (48) contient une série d'impulsions (46).

**4.** Procédé selon l'une quelconque des revendications 1 à 3, dans lequel le deuxième signal ultrasonore (48) est formé en fonction dudit au moins un type de fluide (2) dans l'ensemble de candidats (42).

**5.** Procédé selon la revendication 4, dans lequel au moins un paramètre parmi la fréquence (f), l'amplitude (A), un nombre d'impulsions (46), une durée de ladite au moins une impulsion (46) et un rapport cyclique d'impulsions (46) du deuxième signal ultrasonore (48) est formé en fonction dudit au moins un type de fluide (2) dans l'ensemble de candidats (42).

**6.** Procédé selon l'une quelconque des revendications 1 à 5, dans lequel le premier signal ultrasonore (44) diffère du deuxième signal ultrasonore (48).

**7.** Assemblage (1) pour déterminer le type de fluide (2), en particulier un fluide réactif utilisé dans le secteur automobile, l'assemblage (1) étant configuré pour être monté sur un réservoir (4) contenant le fluide (2), l'assemblage (1) comprenant un sous-assemblage d'envoi/réception d'ultrasons (6) pour envoyer des signaux ultrasonores (22, 44, 48) dans le fluide (2) et pour recevoir les signaux ultrasonores réfléchis (48) provenant du fluide (2), l'assemblage (1) étant configuré pour être commuté à un deuxième mode de fonctionnement dans lequel l'assemblage (1) est configuré pour envoyer et recevoir, par le sous-assemblage d'envoi/réception d'ultrasons (6), un deuxième signal ultrasonore (48) contenant au moins deux fréquences différentes (f), l'assemblage (1) comprenant en outre un module processeur (36) pour déterminer l'atténuation (X) auxdites au moins deux fréquences différentes du deuxième signal ultrasonore (48), l'assemblage (1) étant configuré en outre pour être commuté à un premier mode de fonctionnement dans lequel l'assemblage (1) est configuré pour envoyer et recevoir, par le sous-assemblage d'envoi/réception d'ultrasons (6), un deuxième signal ultrasonore (44), le module processeur (36) étant configuré pour déterminer la vitesse du son (v) à partir du premier signal ultrasonore (44),
**caractérisé en ce que** l'assemblage (1) comprend une section de mémoire (38, 54), la section de mémoire (38, 54) étant configurée pour stocker l'atténuation (X) à au moins deux fréquences différentes (f) et la vitesse du son (v) pour différents types de fluides (2), et **en ce que** le module processeur (36) est configuré pour déterminer automatiquement un ensemble de candidats (42) de types de fluide (2) à partir de la vitesse du son (v) du premier signal ultrasonore (44), l'ensemble de candidats (42) contenant au moins un type de fluide (2), dans lequel la vitesse du son stockée (v) dudit au moins un type de fluide contenu dans l'ensemble de candidats (42) diffère de la vitesse du son (v) déterminée à partir du premier signal ultrasonore (44) d'au moins une quantité prédéterminée (Δv), et **en ce que** le module processeur (36) est configuré pour comparer automatiquement l'atténuation (X) à au moins deux fréquences différentes déterminées à partir du deuxième signal ultrasonore (48) aux valeurs d'atténuation stockées à au moins deux fréquences différentes (X) dudit au moins un type de fluide (2) dans l'ensemble de candidats (42), et dans lequel l'assemblage (1) comprend en outre un module de commutation (37) pour commuter l'assemblage (1) du premier mode dans le deuxième mode en fonction de la vitesse du son (v) déterminée par le module processeur (36) .

**8.** Assemblage (1) selon la revendication 7, dans lequel l'assemblage comprend en outre un capteur de température (10) pour déterminer la température (T) du fluide (2), et dans lequel l'assemblage est configuré pour être commuté du premier mode dans le deuxième mode de fonctionnement en fonction de la température (T) du fluide (2).

**9.** Assemblage (1) selon la revendication 8, dans lequel l'assemblage est configuré pour former le deuxième signal ultrasonore (48) en fonction d'au moins un paramètre parmi la vitesse du son (v) et la température (T) du fluide (2) déterminée à partir du premier signal ultrasonore (44).

**10.** Assemblage (1) selon l'une quelconque des revendications 7 à 9, dans lequel l'assemblage (1) comprend en outre une deuxième section de mémoire (52), la section de mémoire (52) étant configurée pour stocker au moins un paramètre parmi la fréquence, une forme, une durée d'impulsion, un rapport cyclique d'impulsion et une fréquence d'impulsion pour différents types de fluides (2).

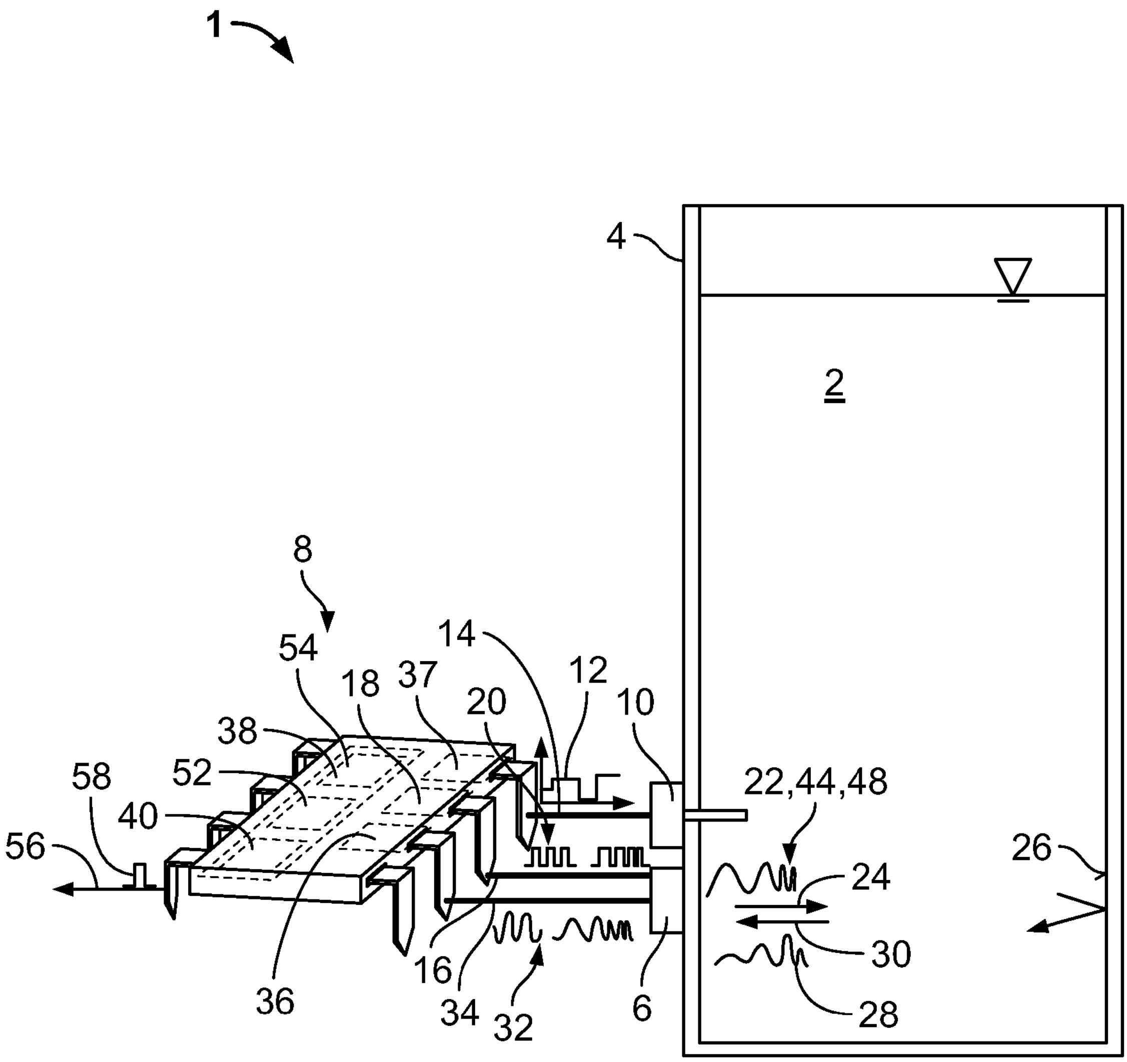
1
4
2
8
54
18
37
14
12
20
10
38
52
58
40
56
22,44,48
24
26
30
28
16
34
32
36
6

Fig. 1

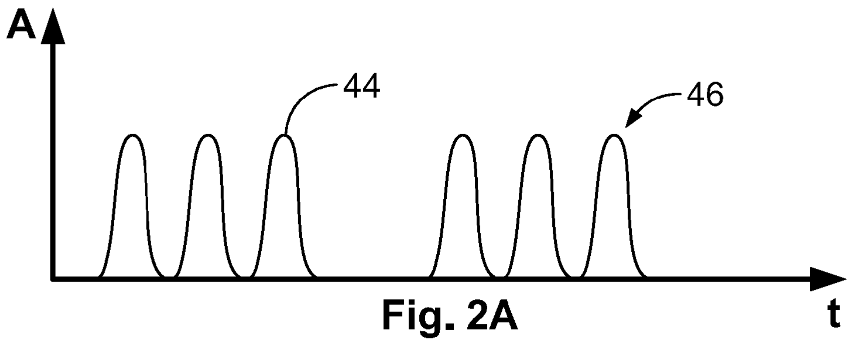


Fig. 2A

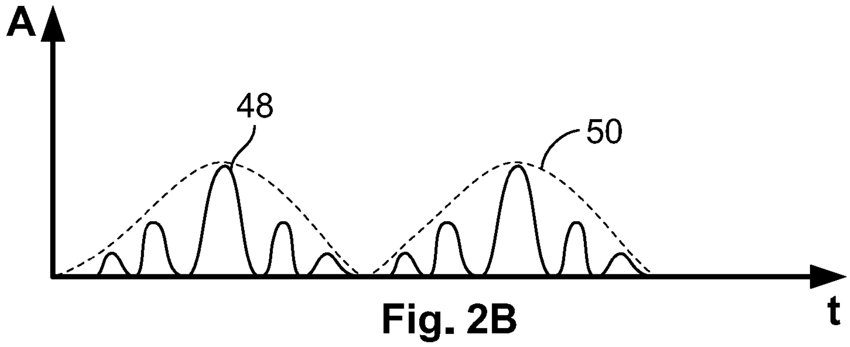


Fig. 2B

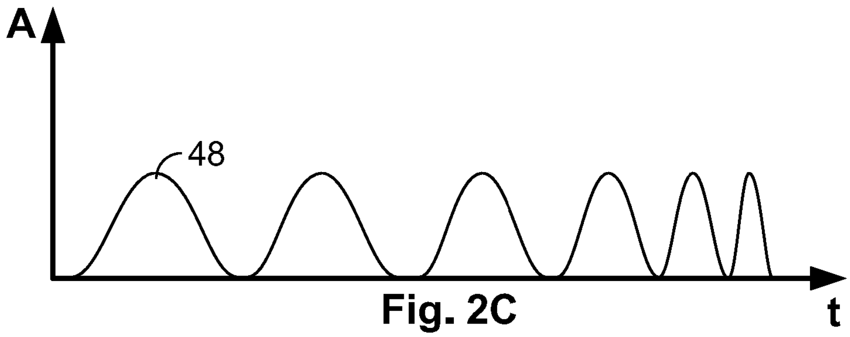


Fig. 2C

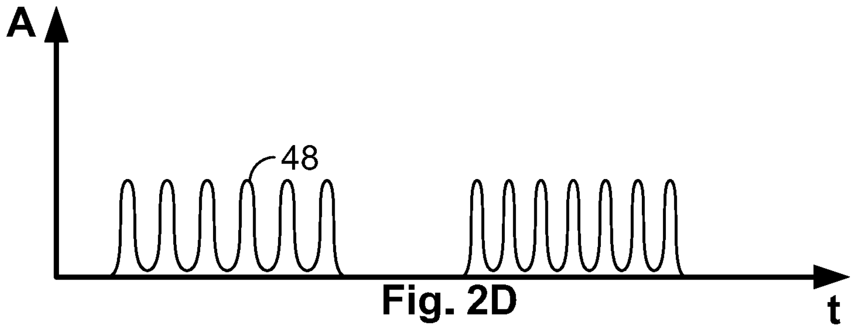


Fig. 2D

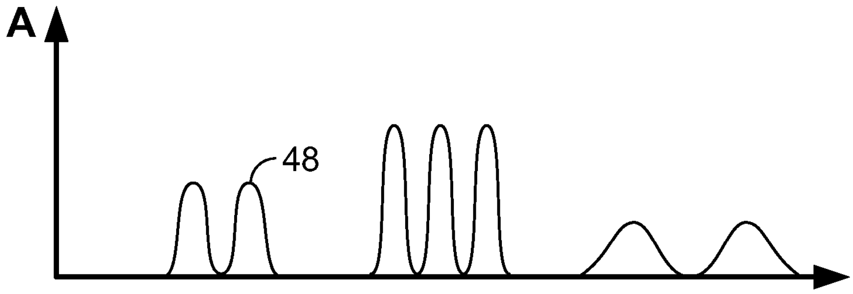


Fig. 2E

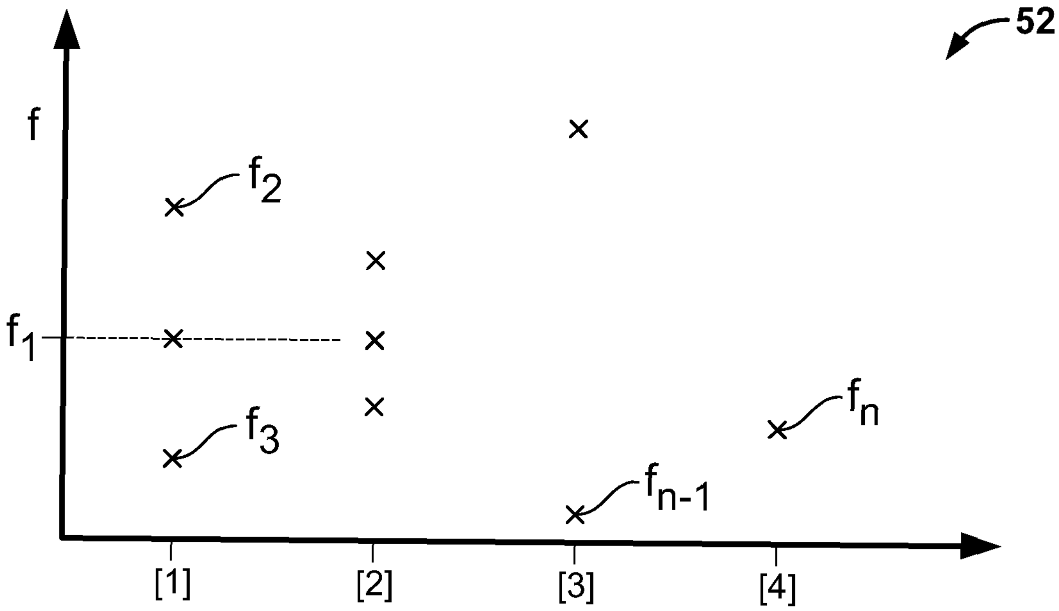


Fig. 3

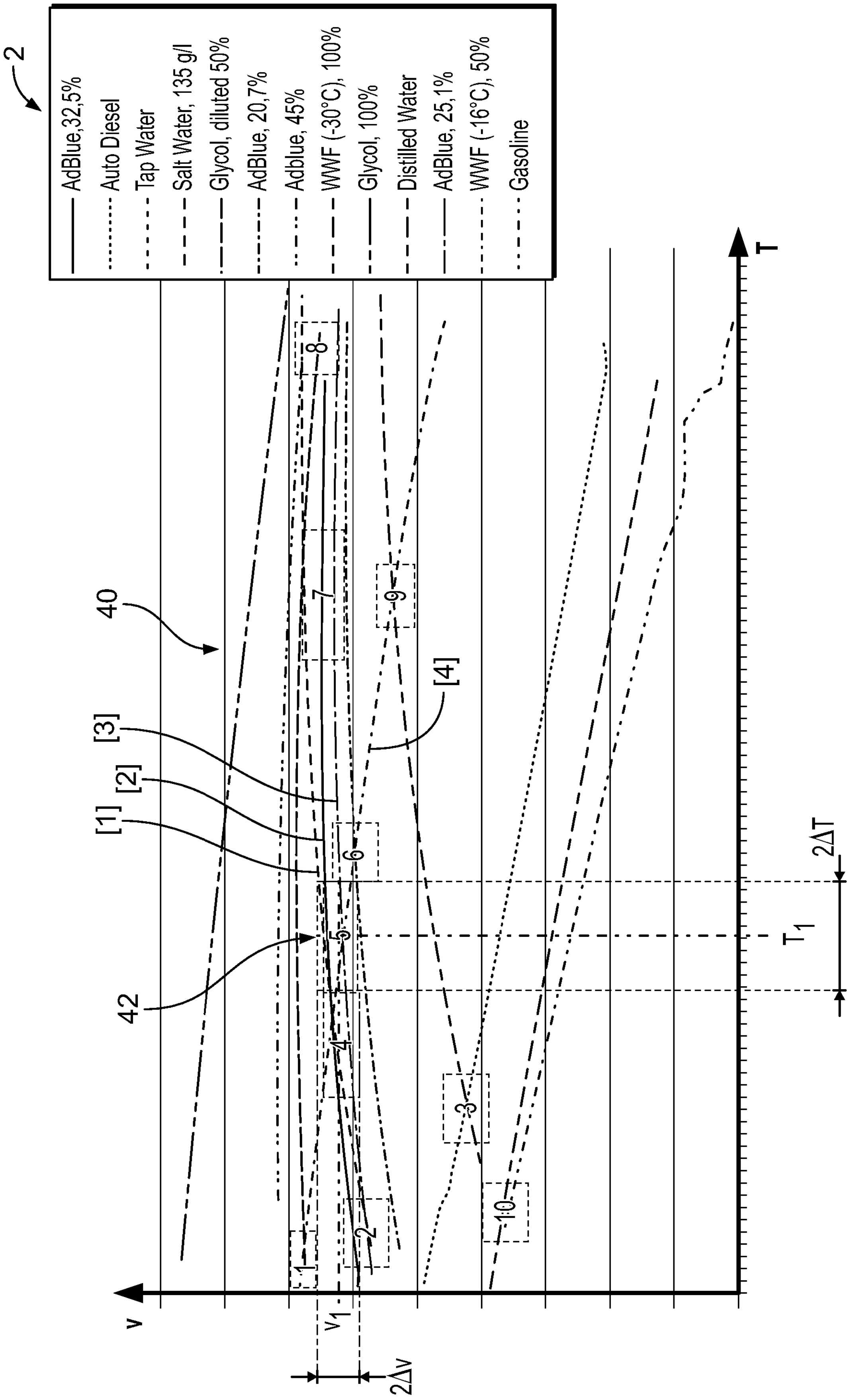
2
AdBlue,32,5%
Auto Diesel
Tap Water
Salt Water, 135 g/l
Glycol, diluted 50%
AdBlue, 20,7%
Adblue, 45%
WWF (-30°C), 100%
Glycol, 100%
Distilled Water
AdBlue, 25,1%
WWF (-16°C), 50%
Gasoline
40
[1]
[2]
[3]
[4]
42
1
2
3
4
5
6
7
8
9
10
v
v1
2Δv
T
T1
2ΔT

Fig. 4

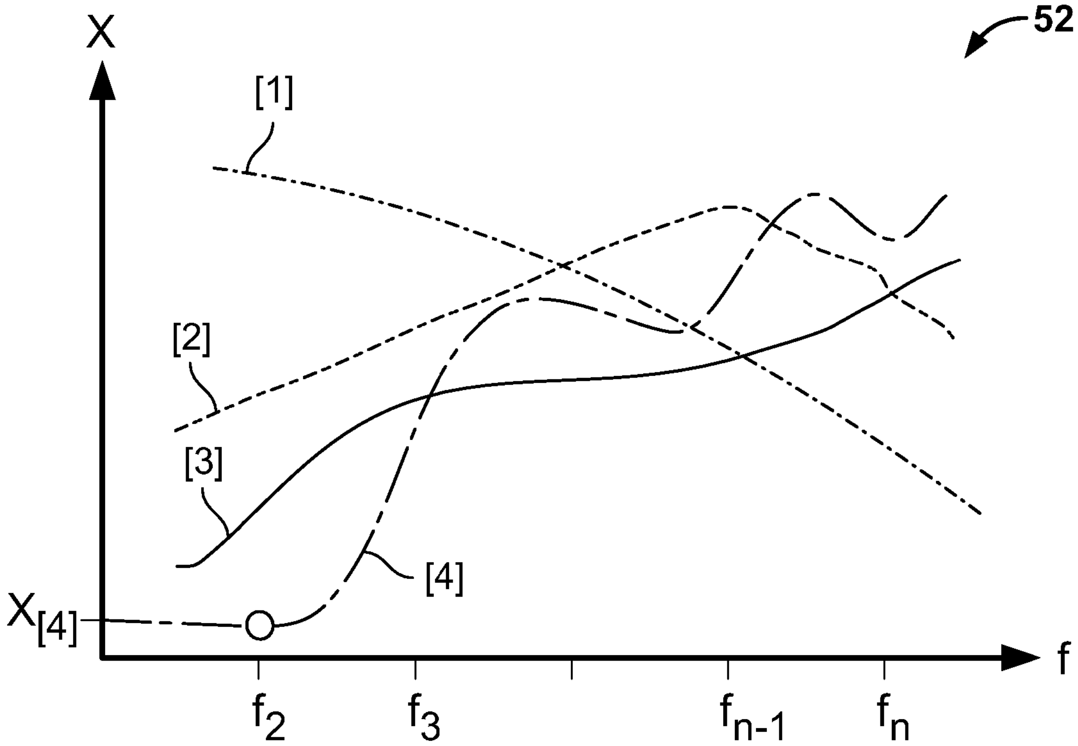


**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7246522 B1
- US 5767407 A
- US 8820147 B2